(19) Europäisches Patentamt / European Patent Office / Office européen des brevets

(11) **EP 4 297 156 A1**

(12) **EUROPEAN PATENT APPLICATION**
published in accordance with Art. 153(4) EPC

(43) Date of publication:
**27.12.2023 Bulletin 2023/52**

(21) Application number: **22831738.4**

(22) Date of filing: **17.06.2022**

(51) International Patent Classification (IPC):
**H01M 50/204** $^{(2021.01)}$     **H01M 50/293** $^{(2021.01)}$
**H01M 50/227** $^{(2021.01)}$

(52) Cooperative Patent Classification (CPC):
**H01M 50/204; H01M 50/227; H01M 50/293;**
Y02E 60/10

(86) International application number:
**PCT/CN2022/099506**

(87) International publication number:
**WO 2023/273920 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 CN 202121466144 U**

(71) Applicant: **BYD Company Limited
Shenzhen, Guangdong 518118 (CN)**

(72) Inventors:
• **CHEN, Jiajia
  Shenzhen, Guangdong 518118 (CN)**
• **TANG, Jianglong
  Shenzhen, Guangdong 518118 (CN)**
• **PENG, Qingbo
  Shenzhen, Guangdong 518118 (CN)**

(74) Representative: **Arnold & Siedsma
Bezuidenhoutseweg 57
2594 AC The Hague (NL)**

(54) **BATTERY BOX AND BATTERY PACK COMPRISING SAME, AND VEHICLE**

(57)  The present disclosure provides a battery box, a battery pack with the battery box, and a vehicle. The battery box (100) includes a metal frame (10). Multiple accommodating cavities (101) for accommodating cells (500) are formed in the metal frame (10). An inner surface of the accommodating cavity (101) is provided with an insulation coating (40). A thickness D of the insulation coating meets: $D = \frac{V \times A}{p \times I}$. I represents a test current, V represents a test voltage, and p represents a volume resistivity of the insulation coating; D represents a spraying thickness of the insulation coating; and A represents a total spraying area of the insulation coating.

FIG. 1

EP 4 297 156 A1

## Description

## CROSS REFERENCE TO RELATED APPLICATIONS

The present disclosure claims priority to Chinese Patent Application No. 202121466144.8, filed on June 30, 2021. The entire content of the Chinese Patent Application is incorporated herein by reference.

## TECHNICAL FIELD

The present disclosure relates to the technical field of batteries, and more specifically, to a battery box, a battery pack with the battery box, and a vehicle.

## BACKGROUND

In related art, cells of many battery packs are insulated from aluminum shells, end plates, or side plates by using PET insulation films (high-temperature resistant polyester films) to clad the cells. A PET film is generally bonded and fixed to a cell by a pressure-sensitive adhesive, or a PET film is thermally pressed to a side plate and an end plate by a thermal pressing process. However, in this technical solution, each cell needs to be clad with an insulation film, the operation is complicated, and the film is prone to wrinkles, which may affect assembly.

## SUMMARY

The present disclosure aims to solve at least one of the technical problems in the related art. Therefore, the present disclosure aims to provide a battery box. The battery box has a simple structure and can be well insulated from a cell without affecting the assembly of the cell.

The present disclosure further provides a battery pack with the foregoing battery box.

The present disclosure further provides a vehicle with the foregoing battery pack.

A battery box according to a first aspect of the present disclosure includes a metal frame. Multiple accommodating cavities for accommodating cells are formed in the metal frame. The multiple accommodating cavities are arranged at intervals. An inner surface of the accommodating cavity is provided with an insulation coating. A thickness D of the insulation coating meets: $D = \frac{V \times A}{p \times I}$. I represents a test current, and the unit is ampere; V represents a test voltage, and the unit is volt; p represents a volume resistivity of the insulation coating, and the unit is $\Omega \cdot m$; D represents a spraying thickness of the insulation coating, and the unit is m; and A represents a total spraying area of the insulation coating, and the unit is $m^2$. In some embodiments, the test voltage V is not less than 3000 volts, and the test current I is less than 1 milliampere.

According to the battery box of the present disclosure, by arranging the multiple accommodating cavities at intervals and arranging the insulation coating on the inner surface of the accommodating cavity, the insulation effect between the battery box and the cell can be improved, the risk of insulation failure can be reduced, and the safety performance of the battery pack can be improved.

According to an embodiment of the present disclosure, the elongation at break of the insulation coating is greater than 100%.

According to an embodiment of the present disclosure, the thickness of the insulation coating is 0.05 mm to 0.3 mm.

According to an embodiment of the present disclosure, the insulation coating is a polyurethane coating.

According to an embodiment of the present disclosure, the metal frame includes: a housing, the housing has at least one end open in a first direction; and multiple partition plates, the multiple partition plates are arranged in the housing, the multiple partition plates extend in the first direction and are arranged at intervals in a second direction perpendicular to the first direction, and the multiple partition plates divide the internal space of the housing into the multiple accommodating cavities.

According to an embodiment of the present disclosure, the height of each accommodating cavity is 0.1 m to 0.13 m.

According to an embodiment of the present disclosure, the spraying area of the insulation coating in each accommodating cavity is 0.1 $m^2$ to 0.5 $m^2$.

A battery pack according to a second aspect of the present disclosure includes the battery box according to the first aspect of the present disclosure; and a cell, the cell being arranged in the accommodating cavity.

According to the battery pack of the present disclosure, by arranging the battery box in the foregoing first aspect, the insulation effect between the battery box and the cell can be improved, the risk of insulation failure can be reduced, and the safety performance of the battery pack can be improved, thereby improving the overall performance of the battery pack.

According to an embodiment of of the present disclosure, the cell is a pouch cell. Multiple pouch cells are arranged in the accommodating cavity, and the multiple pouch cells are arranged in a first direction and are connected in series. The battery pack further includes: an insulation film. The insulation film clads the outside of the multiple pouch cells.

A vehicle according to a third aspect of the present disclosure includes the battery pack according to the second aspect of the present disclosure.

According to the vehicle in the third aspect of the present disclosure, by arranging the battery pack in the foregoing second aspect, the overall performance of the vehicle is improved.

Additional aspects and advantages of the present disclosure will be given in the following description, some of which will become apparent from the following description or may be learned from practices of the present disclosure.

## BRIEF DESCRIPTION OF THE DRAWINGS

FIG. 1 is a schematic view of a battery box according to an embodiment of the present disclosure from one perspective;
FIG. 2 is a schematic view of the battery box shown in FIG. 1 from another perspective;
FIG. 3 is a schematic view of the battery box shown in FIG. 1 from still another perspective;
FIG. 4 is a schematic view of the battery box shown in FIG. 1 from yet another perspective;

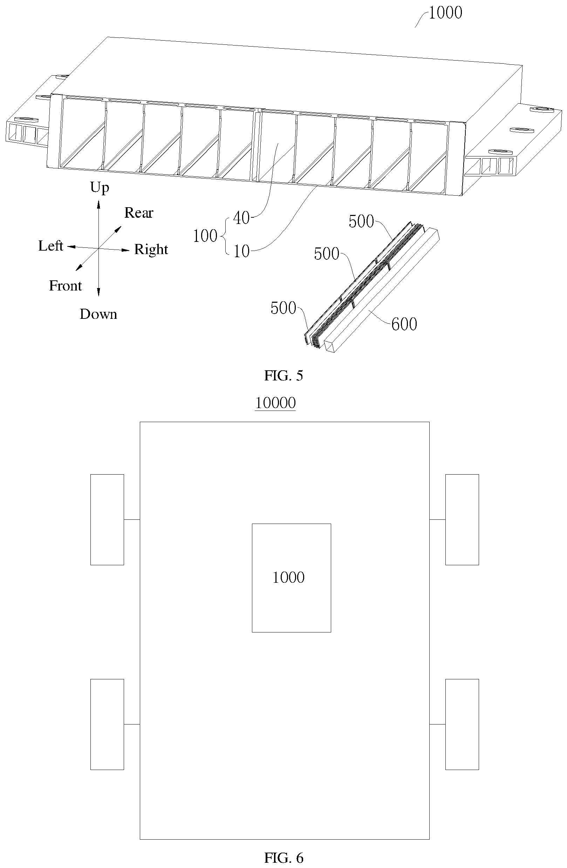

FIG. 5 is an exploded view of a battery pack according to an embodiment of the present disclosure; and
FIG. 6 is a schematic view of a vehicle according to an embodiment of the present disclosure.

Reference numerals:

battery box 100, accommodating cavity 101,
metal frame 10, housing 1, partition plate 2, mounting base 3, mounting hole 31,
insulation coating 40,
cell 500, insulation film 600,
battery pack 1000, vehicle 10000.

## DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, are intended to explain the present disclosure, and cannot be construed as a limitation to the present disclosure.

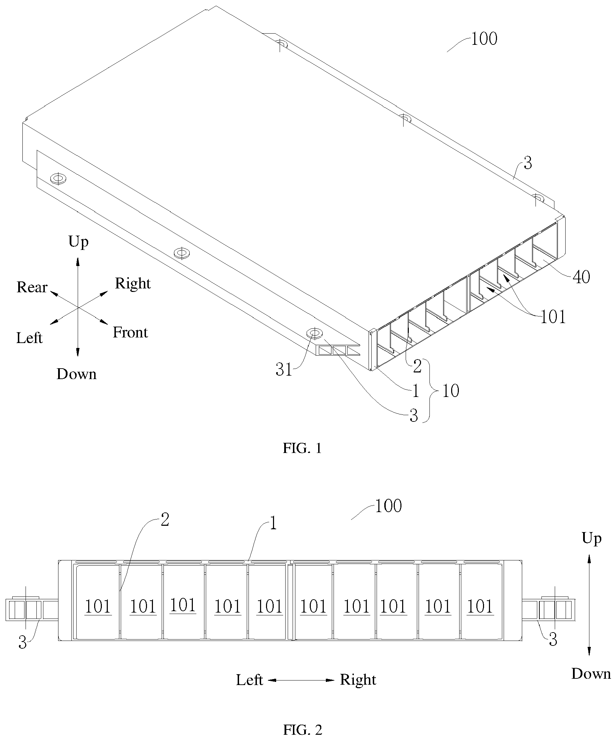

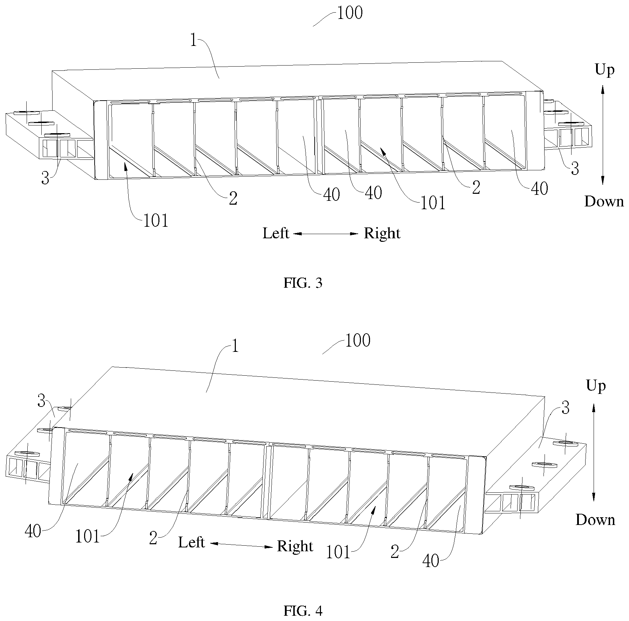

A battery box 100 according to the embodiment of the first aspect of the present disclosure will be described below with reference to FIG. 1 to FIG. 4.

FIG. 1 shows a battery box 100 according to the embodiment of the first aspect of the present disclosure. The battery box includes a metal frame 10. Multiple accommodating cavities 101 for accommodating cells 500 are formed in the metal frame 10. The multiple accommodating cavities 101 are arranged at intervals. An inner surface of the accommodating cavity 101 is provided with an insulation coating 40. In other words, multiple accommodating cavities 101 arranged at intervals may be formed in the battery box 100, and the multiple accommodating cavities 101 are configured to accommodate cells 500. For example, the accommodating cavity 101 can be configured to place a pouch cell, and an inner wall surface of each accommodating cavity 101 is sprayed or coated with an insulation coating 40.

In this embodiment, multiple accommodating cavities 101 are formed in the battery box 100, and each accommodating cavity 101 is respectively configured to place a cell 500 (such as a pouch cell). For example, a group of (a series of) pouch cells (each group of pouch cells may include multiple connected pouch cells) may be arranged in an accommodating cavity 101 only. In this way, multiple groups of cells 500 in the battery box 100 can be separated. Therefore, the number of cell groups arranged in each accommodating cavity 101 can be reduced, the cell 500 in each accommodating cavity 101 can be fixed more conveniently, and the fixing effect on the cell 500 can be improved. Furthermore, since multiple groups of cells 500 are separated by different accommodating cavities 101, the mutual heat insulation effect between the multiple groups of cells 500 is better. In this way, when there is a problem with a group of cells 500, other groups of cells 500 cannot be directly affected, thereby avoiding a series of problems of the other groups of cells 500, and improving the safety performance of the battery pack 1000.

Further, in this embodiment, by arranging the insulation coating 40 on the inner wall surface of each accommodating cavity 101, when the cell 500 is placed in the accommodating cavity 101, the insulation coating 40 can achieve an effect of electrical isolation between the cell 500 and the metal frame 10 of the battery box 100 to ensure the insulation effect between the battery box 100 and the cell 500. In addition, since the insulation coating 40 is directly sprayed or coated on the inner surface of the accommodating cavity 101, it can be ensured that the insulation coating 40 can effectively cover the inner surface of the accommodating cavity 101. Thus, the creepage distance between the cell 500 and the metal frame 10 can be increased, and the risk of insulation failure can be reduced.

Further, a thickness D of the insulation coating 40 can meet:

$$D = \frac{V \times A}{p \times I}.$$

I represents a test current, and the unit is ampere; V represents a test voltage, and the unit is volt; p represents a volume resistivity of the insulation coating 40, and the unit is $\Omega \cdot m$; D represents a spraying thickness of the insulation coating 40, and the unit is m; and A represents a total spraying area of the insulation coating 40, and the unit is m$^2$.

Here, it should be noted that, the test voltage and test current are the test voltage and test current of the battery box 100 in this embodiment during an insulation performance test.

In this embodiment, by enabling the thickness D of the insulation coating 40 to meet the foregoing relational expression, the insulation coating 40 can meet the insulation performance requirements between the battery box 100 and the cell 500, thereby reducing the risk of insulation failure, and improving the safety performance of the battery pack 1000.

Further, the test voltage V is not less than 3000 volts, and the test current Iis less than 1 milliampere, that is, V≥3000 v, and I<1 mA. Therefore, the insulation coating 40 can meet the insulation performance requirements between the battery box 100 and the cell 500.

According to the battery box 100 in the embodiment of the present disclosure, by arranging the multiple accommodating cavities 101 at intervals and arranging the insulation coating 40 on the inner surface of the accommodating cavity 101. The insulation effect between the battery box 100 and the cell 500 can be improved to reduce the risk of insulation failure, and the cells 500 in different accommodating cavities 101 can be separated from each other to improve the safety performance of the battery pack 1000. In addition, it is convenient to place the cell 500 into the accommodating cavity.

In an embodiment of the present disclosure, the insulation coating 40 may be a polyurethane coating. In other words, the insulation coating 40 is mainly made of a polyurethane coating material. The polyurethane coating material has a lower elastic modulus, which can achieve buffering and shock-absorbing effects on the cell 500 and eliminate the local stress concentration effect on the cell 500. In addition, the polyurethane coating can effectively cover the inner surface of the accommodating cavity 101 of the battery box 100, increase the creepage distance between the pouch cell and the metal frame 10, and reduce the risk of insulation failure.

Further, in an embodiment of the present disclosure, the elongation at break of the insulation coating 40 may be greater than 100%. For example, the elongation at break of the insulation coating 40 may be 110%, 120%, 130%, 150%, 170%, 200%, or the like. Thus, the elongation at break of the insulation coating 40 is higher. When the cell 500 is fixed in the accommodating cavity by gluing, the insulation coating 40 can achieve buffering and shock-absorbing effects on the cell 500, and can eliminate the local stress concentration of the cell 500.

According to some embodiments of the present disclosure, the thickness of the insulation coating 40 is 0.05 mm to 0.3 mm. In other words, the thickness of the insulation coating 40 may be in the range of 0.05 mm to 0.3 mm. For example, the thickness of the insulation coating 40 may be 0.1 mm, 0.15 mm, 0.2 mm, 0.25 mm, or the like. Thus, users can determine the thickness of the insulation coating 40 according to the voltages and currents of different battery packs 1000 and different cells 500, so as to meet the insulation requirements of different battery packs 1000 and different cells 500.

According to some embodiments of the present disclosure, as shown in FIG. 1, the metal frame 10 includes: a housing 1 and multiple partition plates 2. The housing 1 may be formed into a shape of a box body, and the housing 1 has at least one end open in a first direction (such as front-and-rear directions shown in FIG. 1). The first direction may be a length direction of the housing or a width direction of the housing. For example, the housing 1 is formed into a shape of a cuboid box body, and the housing 1 has both ends open in the length direction. In other words, the housing 1 is provided with an upper side plate, a left side plate, a lower side plate, and a right side plate that are sequentially connected as a rectangular ring. The upper side plate and the lower side plate are parallel up and down and are arranged at an interval, the left side plate and the right side plate are parallel and are arranged at an interval, and the upper side plate and the left side plate are perpendicular to each other.

Further, the multiple partition plates 2 are arranged in the housing 1. The multiple partition plates 2 extend in a first direction (such as front-and-rear directions shown in FIG. 1), and the multiple partition plates 2 are arranged at intervals in a second direction (such as left-and-right directions shown in FIG. 1) perpendicular to the first direction (such as front-and-rear directions shown in FIG. 1). The multiple partition plates 2 divide the internal space of the housing 1 into multiple accommodating cavities 101. In other words, an accommodating cavity 101 can be defined between every two adjacent partition plates 2, and accommodating cavities 101 are defined respectively between the two outermost partition plates 2 in the width direction of the housing 1 in the multiple partition plates 2 and two side plates in the width direction of the housing 1 (such as the left side plate and right side plate of the housing 1). Thus, multiple accommodating cavities 101 can be formed in the housing 1, the multiple accommodating cavities 101 are arranged at intervals in the width direction of the housing 1, and the multiple accommodating cavities 101 extend in the length direction of the housing 1. Therefore, on the premise of forming multiple horizontally spaced accommodating cavities 101, the structure of the battery box 100 can be simplified, and it is convenient to place the cell 500 into the corresponding accommodating cavity 101.

It should be noted that, when the first direction is the length direction of the housing, the second direction is the width direction of the housing; and when the first direction is the width direction of the housing, the second direction is the length direction of the housing.

In some embodiments, the metal frame 10 may be integrally formed. In other words, the metal frame 10 is not a separated detachable structure. Thus, the integrity of the battery box 100 can be enhanced, and the overall strength of the battery box 100 can be enhanced.

In some embodiments, the height of each accommodating cavity 101 is 0.1 m to 0.13 m. In other words, the height of each accommodating cavity 101 may be in the range of 0.1 m to 0.13 m. As shown in FIG. 2, the height of the accommodating cavity 101 in up-and-down directions is in the range of 0.1 m to 0.13 m. For example, the height of the accommodating cavity 101 may be 0.11 m, 0.12 m, or the like. In this way, users can set the size of the accommodating cavity 101 according to the number of the cells 500 in the cell group, and the size of a certain number of cells 500 connected in series is matched and adapted to the size of the accommodating cavity 101, so that multiple cells 500 in the cell group can fill the accommodating cavity 101.

In some embodiments, the spraying area of the insulation coating 40 in each accommodating cavity 101 is 0.1 m$^2$ to 0.5 m$^2$. In other words, the spraying area of the insulation coating 40 in each accommodating cavity 101 may be in the range of 0.1 m$^2$ to 0.5 m$^2$. For example, the spraying area of the insulation coating 40 in each accommodating cavity 101 may be 0.2 m$^2$, 0.3 m$^2$, 0.4 m$^2$, or the like.

As shown in FIG. 1, the battery box 100 includes a housing 1 in a cuboid shape and multiple partition plates 2 arranged in the housing 1. Both the front side and rear side of the housing 1 are open. The partition plates 2 extend in front-and-rear directions and are arranged at intervals in left-and-right directions of the housing 1. The partition plates 2 divide the space in the housing 1 into multiple accommodating cavities 101 arranged at intervals in left-and-right directions. Each accommodating cavity 101 has a bottom wall, a top wall, a left side wall, and a right side wall. The insulation coating 40 is sprayed on the bottom wall, top wall, left side wall, and right side wall of the accommodating cavity 101. The spraying area of the insulation coating 40 in each accommodating cavity 101 is equal to the total area of the bottom wall, top wall, left side wall, and right side wall of the accommodating cavity 101. The total area of the inner walls of each accommodating cavity 101, namely the spraying area of the insulation coating 40 in each accommodating cavity 101, may be in the range of 0.1 m$^2$ to 0.5 m$^2$.

Therefore, it can be ensured that all inner walls of the accommodating cavity 101 are sprayed with the insulation coating 40, so as to ensure the electrical insulation effect between the battery box 100 and the cell 500.

In some embodiments, the battery box 100 further includes two mounting bases 3. The two mounting bases 3 are respectively arranged on both sides of the width direction of the housing 1. The two mounting bases 3 are symmetrically arranged in the width direction of the housing 1. Further, the mounting base 3 extends outwards in the width direction of the housing 1 away from the housing 1, and the mounting base 3 extends in a strip shape in the length direction of the housing 1. The mounting base 3 is provided with mounting holes 31 that run through the mounting base 3 in the height direction (such as up-and-down directions shown in FIG. 1) of the housing 1. Each mounting base 3 is provided with multiple mounting holes 31, and the multiple mounting holes 31 are arranged at intervals in the length direction (such as front-and-rear directions shown in FIG. 1) of the housing 1.

A battery pack 1000 according to an embodiment of the second aspect of the present disclosure includes the battery box 100 according to the foregoing embodiment of the first aspect of the present disclosure, and a cell 500. The cell 500 is arranged in the accommodating cavity 101. Optionally, the cell 500 may be an aluminum shell cell, a pouch cell, or a cylindrical cell.

Other compositions and operations of the battery pack 1000 according to an embodiment of the present disclosure are known to those of ordinary skill in the art, and are not described in detail herein again.

According to the battery pack 1000 in an embodiment of the present disclosure, by arranging the battery box 100 in the foregoing embodiment of the first aspect, the insulation effect between the battery box 100 and the cell 500 can be improved to reduce the risk of insulation failure, and the cells 500 in different accommodating cavities can be separated from each other to improve the safety performance of the battery pack 1000, thereby improving the overall performance of the battery pack 1000.

For example, the battery pack 1000 may include a battery box 100 and pouch cells. Multiple accommodating cavities 101 are formed in the battery box 100. Multiple groups of pouch cells are formed, and each group of cells 500 includes multiple connected cells 500. Multiple groups of pouch cells may correspond to multiple accommodating cavities 101 one by one, and each group of pouch cells may be arranged in the corresponding accommodating cavity 101. The number of the pouch cell groups may also be greater than the number of the accommodating cavities 101. At this time, a group of or multiple groups of pouch cells may be arranged in an accommodating cavity 101. Preferably, two or less pouch cell groups are arranged in each accommodating cavity 101.

In some embodiments of the present disclosure, the cell 500 may be a pouch cell. Multiple pouch cells may be arranged in the accommodating cavity. The multiple pouch cells in the accommodating cavity may be arranged in a first direction (such as front-and-rear directions shown in FIG. 1) and connected in series. For example, the multiple pouch cells in the accommodating cavity may be sequentially connected in series in the length direction of the accommodating cavity.

Further, the battery pack 1000 may further include: an insulation film 600. The insulation film 600 clads the outside of multiple pouch cells. In other words, the outside of multiple pouch cells may be clad with the insulation film 600. For example, the insulation film 600 may be a PET insulation film 600, and the insulation film 600 may be glued to multiple pouch cells through a pressure-sensitive adhesive. By cladding the outside of the pouch cell with the insulation film 600, the insulation film 600 can preliminarily fix the pouch cell group, which is convenient to place the pouch cell group into the accommodating cavity 101 of the battery box 100. The insulation film 600 and the insulation coating 40 can further form two layers of insulation structures between the pouch cell group and the metal frame 10 of the battery box 100, thereby enhancing the insulation effect between the pouch cell and the metal frame 10 of the battery box 100.

In some embodiments of the present disclosure, the insulation film 600 cladding the outside of the pouch cell group is bonded to the insulation coating 40 on the inner surface of the accommodating cavity 101. For example, the insulation coating 40 on the outer surface of the insulation film 600 and/or the inner surface of the accommodating cavity is coated with an adhesive layer, so that when the pouch cell group is placed into the accommodating cavity, the insulation film 600 is bonded to the insulation coating 40 through the adhesive layer. Here, the inner surface of the accommodating cavity 101 is provided with the insulation coating 40, there is a very high adhesion between the material of the insulation coating 40 and the metal frame 10 (such as an aluminum alloy frame) of the battery box 100, and the material of the insulation coating 40 has a high surface tension and can be well wetted by the adhesive of the adhesive layer to achieve higher bonding strength, thereby being beneficial for the bonding connection between the insulation coating 40 and the insulation film 600, and enhancing the fixing effect on the structure of the cell 500.

A battery pack 1000 according to a specific embodiment of the present disclosure will be described below with reference to FIG. 1 to FIG. 4.

Referring to FIG. 1 to FIG. 4, the battery pack 1000 includes a battery box 100 and multiple cells 500 arranged in the battery box 100.

Specifically, the battery box 100 includes a metal frame 10 and an insulation coating 40. The metal frame 10 is made of an all-aluminum material that is integrally formed. The housing 1 of the metal frame 10 is formed into a hollow structure in a cuboid shape. The front side and rear side of the housing 1 are open. Multiple partition plates 2 are arranged in the housing 1. The partition plates 2 extend in front-and-rear directions to divide the space in the housing 1 into multiple accommodating cavities 101 arranged at intervals in left-and-right directions. The accommodating cavities 101 are configured to accommodate pouch cells.

The length of the housing 1 in front-and-rear directions is in the range of 1.5 m to 2 m. The width of the housing 1 in left-and-right directions is in the range of 1 m to 1.5 m. The height of the housing 1 in up-and-down directions is in the range of 0.1 m to 0.15 m. The width of each accommodating cavity 101 in left-and-right directions is in the range of 0.01 m to 0.05 m. The height of the accommodating cavity 101 in up-and-down directions is in the range of 0.1 m to 0.13 m.

Four surfaces of the accommodating cavity 101 are all sprayed or coated with the insulation coating 40, and the insulation coating 40 is used between the pouch cell and the aluminum housing 1 for insulation. The thickness of the insulation coating 40 needs to meet a certain thickness value. The thickness of the insulation coating 40 can be calculated according to the following formula: $I=V*A/(p*D)$. V represents a test voltage, and the unit is v; p represents a volume resistivity of the insulation coating, and the unit is $\Omega*m$; D represents a spraying thickness of the insulation coating, and the unit is m; A represents a total spraying area of the insulation coating, and the unit is $m^2$; and I represents a test current, the unit is A, and I generally needs to meet the requirement: I< 1 mA, where V=3000 v. The spraying area of the insulation coating 40 of a single accommodating cavity 101 is 0.1 $m^2$ to 0.5 $m^2$, and the spraying thickness of the insulation coating 40 is 0.05 mm to 0.3 mm.

Multiple cells 500 can be formed into multiple cell groups. Each cell group includes multiple cells 500. The multiple cells 500 in each cell group may be arranged in a first direction (such as front-and-rear directions shown in FIG. 1) and connected in series. One or two cell groups may be arranged in an accommodating cavity 101. When the cell group is fixed in the accommodating cavity 101 by bonding, the inner surface of the housing 1 may be sprayed with the insulation coating 40. There is a very high adhesion between the coating material and the metal frame 10, and then, the cell group is bonded to the insulation coating 40 on the inner surface of the accommodating cavity by the adhesive layer. The coating material has a high surface tension and can be well wetted by the adhesive to achieve higher bonding strength, thereby enhancing the bonding effect between the pouch cell group and the insulation coating 40, and enhancing the fixing effect on the structure of the pouch cell group.

Further, the insulation coating 40 is mainly made of a polyurethane coating material. The elastic modulus of the polyurethane coating is lower, and the elongation at break is greater than 100%. When the cell group is bonded to the inner surface of the accommodating cavity, in addition to shear stress and tensile stress, the cell group also has a torsional moment in the length direction of the cell group in the accommodating cavity. At this time, the moment arm is the length of the cell group, which is very prone to stress concentration and damage. The polyurethane coating material in this embodiment can achieve effects of buffering, shock absorption, and elimination of stress concentration.

According to the battery pack 1000 in the embodiment of the present disclosure, the inner surface of the accommodating cavity 101 of the battery box 100 is sprayed with the insulation coating 40. This coating material can effectively cover the inner surface of an aluminum material cavity, increase the creepage distance between a pouch cell and an aluminum material, and reduce the risk of insulation failure.

A vehicle 10000 according to the embodiment of the third aspect of the present disclosure includes the battery pack 1000 according to the foregoing embodiment of the second aspect of the present disclosure.

Other compositions and operations of the vehicle 10000 according to the embodiment of the present disclosure are known to those of ordinary skill in the art, and are not described in detail herein again.

According to the vehicle 10000 in the embodiment of the present disclosure, by arranging the battery pack 1000 in the foregoing embodiment of the second aspect, the insulation effect between the battery box 100 and the cell 500 can be improved, the risk of insulation failure can be reduced, and the safety performance of the vehicle 10000 can be improved.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

In addition, terms "first" and "second" are used merely for the purpose of description, and shall not be construed as indicating or implying relative importance or implying the number of indicated technical features. Therefore, a feature limited by "first" or "second" may explicitly or implicitly include one or more of the features. In the descriptions of the present disclosure, "multiple" means two or more, unless otherwise definitely and specifically limited.

In the present disclosure, unless otherwise explicitly specified or defined, the terms such as "mount", "connect", "connection", and "fix" should be understood in a broad sense. For example, the connection may be a fixed connection, a detachable connection, or an integral connection; or the connection may be a mechanical connection, an electrical connection, or a communication; or the connection may be a direct connection, an indirect connection through an intermediate medium, an internal communication between two components, or an interaction relationship between two components. A person of ordinary skill in the art may understand the specific meanings of the foregoing terms in the present disclosure according to specific situations.

In the descriptions of this specification, the description of a reference term such as "an embodiment", "some embodiments", "an example", "a specific example", or "some examples" means that a specific feature, structure, material, or characteristic that is described with reference to the embodiment or the example is included in at least one embodiment or example of the present disclosure. In this specification, schematic descriptions of the foregoing terms are not necessarily directed at the same embodiment or example. Moreover, the described specific features, structures, materials, or characteristics may be combined in a proper manner in any one or more embodiments or examples. In addition, a person skilled in the art may integrate or combine different embodiments or examples described in the specification and features of the different embodiments or examples as long as they are not contradictory to each other.

Although the embodiments of the present disclosure have been shown and described, a person of ordinary skill in the art should understand that various changes, modifications, replacements, and variations may be made to these embodiments without departing from the principles and spirit of the present disclosure, and the scope of the present disclosure is defined by claims and their equivalents.

## Claims

1. A battery box (100) comprising a metal frame (10), a plurality of accommodating cavities (101) for accommodating cells (500) being formed in the metal frame (10), the plurality of accommodating cavities (101) being arranged at intervals, an inner surface of the accommodating cavity (101) being provided with an insulation coating (40),
   and a thickness D of the insulation coating (40) meeting:

$$D = \frac{V \times A}{p \times I}$$

   wherein V represents a test voltage, the unit is volt, and the test voltage V is not less than 3000 volts; I represents a test current, the unit is ampere, and the test current I is less than 1 milliampere; p represents a volume resistivity of the insulation coating (40), and the unit is $\Omega \cdot m$; D represents a spraying thickness of the insulation coating (40), and the unit is m; and A represents a total spraying area of the insulation coating (40), and the unit is $m^2$.

2. The battery box according to claim 1, wherein the elongation at break of the insulation coating (40) is greater than 100%.

3. The battery box according to claim 1 or 2, wherein the thickness of the insulation coating (40) is 0.05 mm to 0.3 mm.

4. The battery box according to any one of claims 1 to 3, wherein the insulation coating (40) is a polyurethane coating.

5. The battery box according to any one of claims 1 to 4, wherein the metal frame (10) comprises:

a housing (1), the housing (1) has at least one end open in a first direction; and
a plurality of partition plates (2), the plurality of partition plates (2) are arranged in the housing (1), the plurality of partition plates (2) extend in the first direction and are arranged at intervals in a second direction perpendicular to the first direction, and the plurality of partition plates (2) divide the internal space of the housing (1) into the plurality of accommodating cavities (101).

6. The battery box according to claim 5, wherein the height of each accommodating cavity (101) is 0.1 m to 0.13 m.

7. The battery box according to claim 5 or 6, wherein the spraying area of the insulation coating (40) in each accommodating cavity (101) is 0.1 m$^2$ to 0.5 m$^2$.

8. A battery pack, comprising:

   a battery box (100) according to any one of claims 1 to 7; and
   a cell (500), the cell (500) being arranged in the accommodating cavity (101).

9. The battery pack according to claim 8, wherein the cell (500) is a pouch cell, a plurality of pouch cells are arranged in the accommodating cavity (101), the plurality of pouch cells are arranged in a first direction and are connected in series, and the battery pack (1000) further comprising: an insulation film (600), the insulation film (600) cladding the outside of the plurality of pouch cells.

10. A vehicle, comprising a battery pack (1000) according to claim 8 or 9.

FIG. 1

FIG. 2

FIG. 3

FIG. 4

1000

Up

Rear

Left — Right

Front

Down

40

100

10

500

500

500

600

FIG. 5

10000

1000

FIG. 6

## INTERNATIONAL SEARCH REPORT

| | International application No. |
|---|---|
| | **PCT/CN2022/099506** |

**A. CLASSIFICATION OF SUBJECT MATTER**

H01M 50/204(2021.01)i; H01M 50/293(2021.01)i; H01M 50/227(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 电池, 箱, 腔, 绝缘涂层, 聚氨酯, 厚度, battery, box, chamber, insulating coating, polyurethane, thickness

**C. DOCUMENTS CONSIDERED TO BE RELEVANT**

| Category* | Citation of document, with indication, where appropriate, of the relevant passages | Relevant to claim No. |
|---|---|---|
| PX | CN 215070190 U (BYD CO., LTD.) 07 December 2021 (2021-12-07) description, paragraphs 3-65, and figures 1-4 | 1-10 |
| Y | CN 213026293 U (BYD CO., LTD.) 20 April 2021 (2021-04-20) description, paragraphs 35-202, and figures 1-23 | 1-10 |
| Y | CN 205248318 U (LG CHEMICAL LTD.) 18 May 2016 (2016-05-18) description, paragraphs 15-109, and figures 1-3 | 1-10 |
| Y | CN 111312964 A (BYD CO., LTD.) 19 June 2020 (2020-06-19) description, paragraphs 36-153, and figures 1-22 | 1-10 |
| Y | CN 111293253 A (BYD CO., LTD.) 16 June 2020 (2020-06-16) description, paragraphs 33-142, and figures 1-19 | 1-10 |
| Y | US 2018198108 A1 (LG CHEMICAL LTD.) 12 July 2018 (2018-07-12) description, paragraphs 83-102, and figures 1-11 | 1-10 |
| A | JP 2006066083 A (NISSAN MOTOR CO., LTD.) 09 March 2006 (2006-03-09) entire document | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2022** | **13 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/099506**

| Patent document cited in search report | | | Publication date (day/month/year) | Patent family member(s) | | | Publication date (day/month/year) |
|---|---|---|---|---|---|---|---|
| CN | 215070190 | U | 07 December 2021 | None | | | |
| CN | 213026293 | U | 20 April 2021 | None | | | |
| CN | 205248318 | U | 18 May 2016 | WO | 2016048028 | A1 | 31 March 2016 |
| | | | | EP | 3163648 | A1 | 03 May 2017 |
| | | | | CN | 105470415 | A | 06 April 2016 |
| | | | | JP | 2017532717 | A | 02 November 2017 |
| | | | | KR | 20160037095 | A | 05 April 2016 |
| | | | | US | 2017155102 | A1 | 01 June 2017 |
| | | | | CN | 105470415 | B | 07 December 2018 |
| | | | | KR | 101968980 | B1 | 16 April 2019 |
| | | | | JP | 6522736 | B2 | 29 May 2019 |
| | | | | US | 10749150 | B2 | 18 August 2020 |
| | | | | EP | 3163648 | B1 | 18 August 2021 |
| CN | 111312964 | A | 19 June 2020 | WO | 2021212794 | A1 | 28 October 2021 |
| | | | | CN | 111312964 | B | 07 January 2022 |
| CN | 111293253 | A | 16 June 2020 | WO | 2021212795 | A1 | 28 October 2021 |
| | | | | TW | 202141827 | A | 01 November 2021 |
| | | | | CN | 111293253 | B | 23 October 2020 |
| | | | | TW | 751785 | B1 | 01 January 2022 |
| US | 2018198108 | A1 | 12 July 2018 | KR | 20180081292 | A | 16 July 2018 |
| | | | | KR | 102069175 | B1 | 22 January 2020 |
| | | | | US | 10770711 | B2 | 08 September 2020 |
| JP | 2006066083 | A | 09 March 2006 | None | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202121466144